(19) Europäisches Patentamt / European Patent Office / Office européen des brevets

(11) **EP 4 015 246 B1**

(12) **EUROPEAN PATENT SPECIFICATION**

(45) Date of publication and mention
of the grant of the patent:
**01.11.2023 Bulletin 2023/44**

(21) Application number: **21208399.2**

(22) Date of filing: **16.11.2021**

(51) International Patent Classification (IPC):
**B60C 11/03** $^{(2006.01)}$

(52) Cooperative Patent Classification (CPC):
**B60C 11/0304; B60C 11/033;** B60C 2011/0353;
B60C 2011/0381; B60C 2011/0383;
B60C 2011/0388; B60C 2011/1209;
B60C 2011/1213

(54) **TIRE WITH TREAD HAVING A DESIGNATED MOUNTING DIRECTION**

REIFEN MIT LAUFFLÄCHENPROFIL MIT VORBESTIMMTER EINBAURICHTUNG

PNEU AVEC BANDE DE ROULEMENT AYANT UN SENS DE MONTAGE DÉSIGNÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2020 JP 2020208703**

(43) Date of publication of application:
**22.06.2022 Bulletin 2022/25**

(73) Proprietor: **Sumitomo Rubber Industries, Ltd.
Kobe-shi, Hyogo 651-0072 (JP)**

(72) Inventor: **NAKANO, Kazuhiro
Kobe-shi, 651-0072 (JP)**

(74) Representative: **TBK
Bavariaring 4-6
80336 München (DE)**

(56) References cited:
EP-A1- 2 620 298          EP-A1- 3 023 267
EP-A1- 3 549 791          EP-A1- 3 689 643
US-A1- 2019 152 268

**Description**

RELATED APPLICATIONS

This application claims the benefit of foreign priority to JP 2020 208 703 A, filed December 16, 2020.

FIELD OF THE INVENTION

The present invention relates to a tyre.

BACKGROUND OF THE INVENTION

JP 2012 224 245 A discloses a pneumatic tyre. The tyre includes a tread portion which is provided with center main grooves extending continuously in the tyre circumferential direction on the tyre equator side and shoulder main grooves extending continuously in the tyre circumferential direction located on the tread edge sides with respect to the center grooves. US 2019/152268 A1 discloses a tyre having the features of the preamble of claim 1. EP 689 643 A1, EP 3 023 267 A1, EP 2 620 298 A1 and EP 3 549 791 A1 disclose further related prior art tyres.

SUMMARY OF THE INVENTION

In recent years, consideration for the living environment has been emphasized, and reduction of pattern noise of tyres is desired. In addition, sufficient traction of tyres is also required on snowy roads.
The present invention has been made in view of the above circumstance and has a major object to provide a tyre capable of reducing pattern noise while maintaining traction on snow.
The present invention provides a tyre as defined in claim 1. Advantageous further developments are set out in the dependent claims.

BRIEF DESCRIPTION OF THE DRAWINGS

FIG. 1 is a development view of a tread portion of a tyre in accordance with an embodiment;
FIG. 2 is a cross-sectional view taken long the line A-A of FIG. 1;
FIG. 3 is a partial enlarged view of a crown land portion and an inside middle land portion;
FIG. 4 is a partial enlarged view of the inside middle land portion and an inside shoulder land portion;
FIG. 5 is a partial enlarged view of an outside middle land portion and an outside shoulder land portion;
FIG. 6A is a development view of a tread portion in accordance with a comparative example 1; and
FIG. 6B is a development view of a tread portion in accordance with a comparative example 2.

DETAILED DESCRIPTRION OF THE INVENTION

An embodiment of the present invention will be explained below with reference to the accompanying drawings.

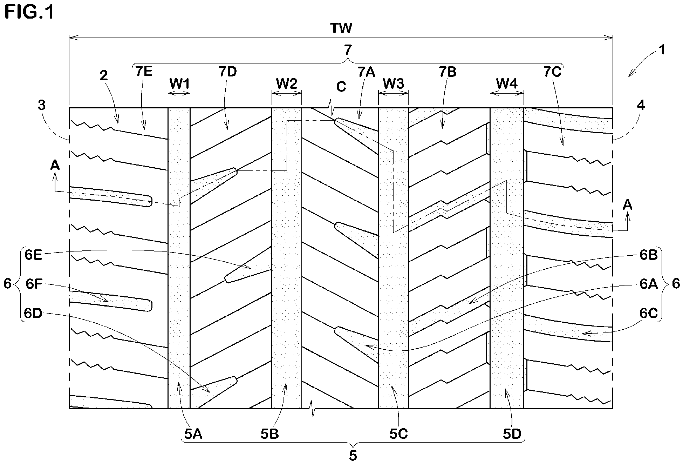

FIG. 1 illustrates a development view of a tread portion 2 of a tyre 1 in accordance with an embodiment. The tyre 1, for example, is preferably embodied as a passenger car pneumatic tyre. However, the present invention is not limited to such an embodiment, and may be embodied as a heavy-duty tyre, and a non-pneumatic tyre that is not filled with a compressed air therein, for example.

[Tread portion]

The tyre 1 according to the present embodiment includes the tread portion 2 having a designated mounting direction to a vehicle. The tread portion 2 includes an outside tread edge 3 located outwardly of a vehicle when being mounted to the vehicle, and an inside tread edge 4 located inwardly of a vehicle when being mounted to the vehicle. The mounting direction to a vehicle is indicated on a sidewall portion of the tyre using letters or marks, for example.
The outside tread edge 3 and the inside tread edge 4 are the axial outermost edges of the ground contacting patch of the tyre 1 which occurs under the condition such that the tyre 1 under a normal state is grounded on a plane with a standard tyre load at zero camber angles. As used herein, the "normal state" is such that the tyre 1 is mounted onto a standard wheel rim with a standard pressure but loaded with no tyre load. As used herein, unless otherwise noted, dimensions of portions of the tyre 1 are values measured under the normal state.

As used herein, the "standard wheel rim" is a wheel rim officially approved for each tyre by standards organizations on which the tyre is based, wherein the standard wheel rim is the "standard rim" specified in JATMA, the "Design Rim" in TRA, and the "Measuring Rim" in ETRTO, for example.

As used herein, the "standard pressure" is a standard pressure officially approved for each tyre by standards organizations on which the tyre is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

As used herein, the "standard tyre load" is a tyre load officially approved for each tyre by standards organizations in which the tyre is based, wherein the standard tyre load is the "maximum load capacity" in JATMA, the maximum value given in the above-mentioned table in TRA, and the "Load Capacity" in ETRTO, for example. When the tyre is a passenger car tyre, the standard tyre load is defined as an 88% of the above-mentioned tyre load.

The tread portion 2 according to the present embodiment includes a plurality of circumferential grooves 5 extending continuously in the tyre circumferential direction between the outside tread edge 3 and the inside tread edge 4, and a plurality of lateral grooves 6 extending in a direction intersecting the tyre circumferential direction. Such lateral grooves 6 can form snow columns in the tyre axial direction and can exert snow traction. The tread portion 2 includes a plurality of land portions 7 divided by the plurality of circumferential grooves 5. In the present embodiment, the land portions 7 include a crown land portion 7A, an inside middle land portion 7B, an inside shoulder land portion 7C, an outside middle land portion 7D, and an outside shoulder land portion 7E.

[Circumferential grooves]

In the present embodiment, the circumferential grooves 5 extend straight in parallel with the tyre circumferential direction. Note that the circumferential grooves 5, for example, may extend in a wavy manner.

The circumferential grooves 5 include an outside shoulder circumferential groove 5A, an outside crown circumferential groove 5B, an inside crown circumferential groove 5C and an inside shoulder circumferential groove 5D which are arranged in this order from the outside tread edge 3 side to the inside tread edge 4 side.

In the present embodiment, the outside shoulder circumferential groove 5A is arranged in most outside tread edge 3 side among the plurality of circumferential grooves 5. In the present embodiment, the outside crown circumferential groove 5B is arranged between the outside shoulder circumferential groove 5A and the tyre equator C. In the present embodiment, the inside shoulder circumferential groove 5D is arranged in most inside tread edge 4 side among the plurality of circumferential grooves 5. In the present embodiment, the inside crown circumferential groove 5C is arranged between the inside shoulder circumferential groove 5D and the tyre equator C.

The circumferential grooves 5A to 5D as described above generate air column resonance sound when the tyre travels on a dry road surface, and which tends to affect the pattern noise of the tyre 1. Such pattern noise is largely affected by the air column resonance sound generated by the circumferential grooves 5 on the outside tread edge 3 side (that is, outside a vehicle). In addition, the air column resonance sound tends to increase as the groove widths of the circumferential grooves 5 increase.

In the present embodiment, a groove width W1 of the outside shoulder circumferential groove 5A, a groove width W2 of the outside crown circumferential groove 5B, a groove width W3 of the inside crown circumferential groove 5C and a groove width W4 of the inside shoulder circumferential groove 5D satisfy the following relation:

$$W1 < W2 < W3 < W4.$$

In this embodiment, the groove widths W1 to W4 are specified as the maximum groove widths of the respective circumferential grooves.

In the present embodiment, the tyre 1 with the circumferential grooves 5A to 5D which satisfy the above relation can reduce the air column resonance sound in the circumferential grooves from the inside tread edge 4 side to the outside tread edge 3 side which has a large influence on the pattern noise. As a result, the tyre 1 can reduce pattern noise.

On the other hand, in the tyre 1 according to the present embodiment, the groove widths W1 to W4 of the circumferential grooves 5A to 5D are set larger from the outside tread edge 3 side to the inside tread edge 4 side which has less influence on the pattern noise. As a result, the tyre 1 can ensure a groove volume of the tread portion 2, so that snow traction and drainage performance of the tyre can be maintained.

In order to exhibit the above effect more effectively, the groove width W1 of the outside shoulder circumferential groove 5A is preferably in a range of from 70% to 90% of the groove width W2 of the outside crown circumferential groove 5B. Further, the groove width W2 of the outside crown circumferential groove 5B is preferably in a range of 70% to 90% of the groove width W3 of the inside crown circumferential groove 5C. Furthermore, the groove width W3 of the inside crown circumferential groove 5C is preferably in a range of 70% to 90% of the groove width W4 of the inside shoulder circumferential groove 5D. In this way, the groove widths W1 to W4 are set so as to gradually decrease from the inside tread edge 4 side toward the outside tread edge 3 side, and thus reduction of drainage performance and traction performance on snow can be prevented while reducing pattern noise.

The groove widths W1 to W4 can be set appropriately as long as the above relationship is satisfied. The groove widths W1 to W4 are preferably set in a range of 2.0% to 8.0% of the tread width TW, for example. The tread width TW is the tyre axial distance between the outside tread edge 3 and the inside tread edge 4.

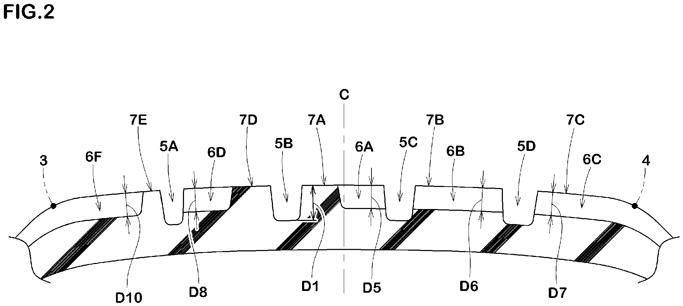

FIG. 2 illustrates a cross-sectional view taken long the line A-A of FIG. 1. As illustrated in FIG. 2, groove depths D1 (maximum groove depths) of the circumferential grooves 5A to 5D are set in a range of about 6 to 16 mm. In the present embodiment, the groove depths D1 of the circumferential grooves 5A to 5D are the same with each other. Alternatively, the same as the groove width W1 to W4 as illustrated in FIG. 1, the groove depths may be set so that the groove depths D1 decreases from the inside tread edge 4 side to the outside tread edge 3 side. This makes it possible to further reduce pattern noise.

[Lateral grooves]

As illustrated in FIG. 1, in the present embodiment, the lateral grooves 6 include a plurality of crown lateral grooves 6A, a plurality of inside middle lateral grooves 6B, a plurality of inside shoulder lateral grooves 6C, a plurality of first outside middle lateral grooves 6D, a plurality of second outside middle lateral grooves 6E, and a plurality of outside shoulder lateral grooves 6F.

[Crown lateral grooves]

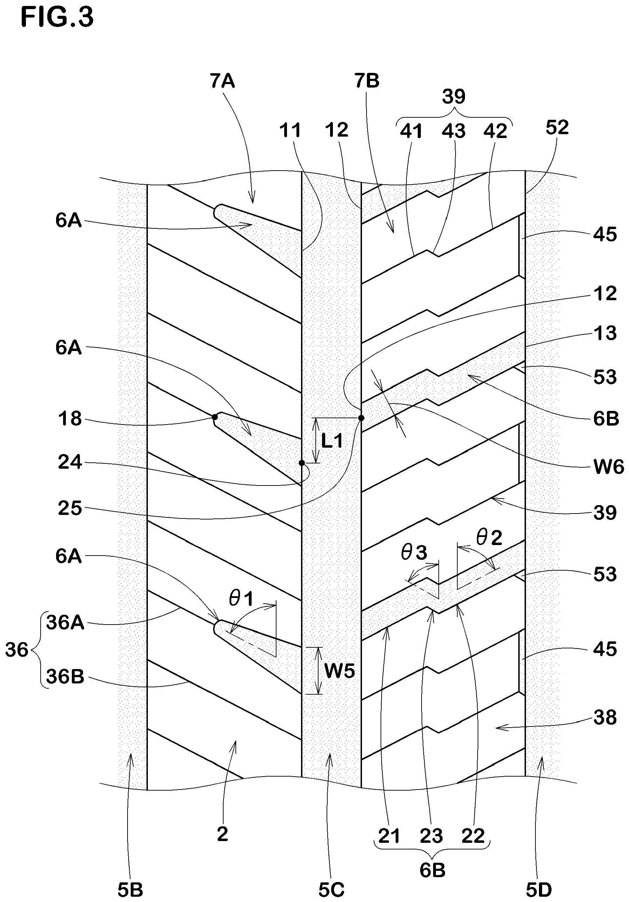

FIG. 3 illustrates a partial enlarged view of the crown land portion 7A and the inside middle land portion 7B. As illustrated in FIG. 3, the crown lateral grooves 6A extend from the inside crown circumferential groove 5C and terminate within the crown land portion 7A. The crown lateral grooves 6A are spaced in the tyre circumferential direction on the crown land portion 7A. The crown lateral grooves 6A have respective first openings 11 that open to the inside crown circumferential groove 5C.

In the present embodiment, the crown lateral grooves 6A, for example, have less groove volume than that of lateral grooves that connect the inside crown circumferential groove 5C and the outside crown circumferential groove 5B, thus reducing air pumping noise when grounding. Further, the first openings 11 open to the circumferential groove on the inside tread edge 4 side (shown in FIG. 1) which has a small effect on pattern noise, and pattern noise of the tyre can be reduced effectively. Furthermore, the crown lateral grooves 6A, when driving on snow, can compact snow from the first openings 11 toward axially inner ends 18 thereof, providing powerful snow traction.

In the present embodiment, a groove width of each crown lateral groove 6A decreases from the first opening 11 to the axially inner end 18 continuously. Thus, the crown lateral grooves 6A can compact snow firmly from the first openings 11 toward the axially inner ends 18, providing powerful snow traction.

Preferably, the maximum groove width W5 of each crown lateral groove 6A is set in a range of from about 3.5% to about 5.0% of the tread width TW (shown in FIG. 1). As illustrated in FIG. 2, preferably, the groove depth (the maximum groove depth) D5 of each crown lateral groove 6A is in a range of from 50% to 90% of the groove depth D1 of the inside crown circumferential groove 5C (not illustrated).

As illustrated in FIG. 3, in the present embodiment, the crown lateral grooves 6A are inclined at an angle with respect to the depth) tyre axial direction. Such crown lateral grooves 6A have edge components in the tyre circumferential direction and the tyre axial direction, improving snow traction as well as cornering performance. In addition, the crown lateral grooves 6A, in a region between the first openings 11 and the inner ends 18, can stagger the timing of contact with and release from the ground. Thus, the crown lateral grooves 6A can reduce the pumping noise when grounding and reduce the pattern noise. In order to further improve the above-mentioned effect, an angle $\theta 1$ of the crown lateral grooves 6A is preferably in a range of 50 to 70 degrees with respect to the tyre circumferential direction. Note that the angle of the lateral grooves 6 is measured using the groove centerlines of the lateral grooves 6.

[Inside middle lateral grooves]

The inside middle lateral grooves 6B extend from the inside shoulder circumferential groove 5D to the inside crown circumferential groove 5C. The inside middle lateral grooves 6B, in the inside middle land portion 7B, are spaced in the tyre circumferential direction. The inside middle lateral grooves 6B have respective second openings 12 that open to the inside crown circumferential groove 5C and respective third openings 13 that open to the inside shoulder circumferential groove 5D.

Since the inside middle lateral grooves 6B connect the inside shoulder circumferential groove 5D and the inside crown circumferential groove 5C, the inside middle land portion 7B can form axially long snow columns. Thus, the inside middle lateral grooves 6B can be helpful to improve snow traction. In addition, the inside middle lateral grooves 6B are provided on the inside tread edge 4 (shown in FIG. 1) side which has a small effect on pattern noise. Thus, the inside middle lateral grooves 6B can reduce the effect of air pumping noise on the pattern noise.

In order to further improve the above-mentioned effect, the maximum groove width W6 of each inside middle lateral grooves 6B is preferably set in a range of about 1.5% to about 3.5% of the tread width TW (shown in FIG. 1). As illustrated in FIG. 2, a groove depth (the maximum groove depth) D6 of each inside middle lateral groove 6B is preferably in a range of 50% to 90% of the groove depth D1 of the inside crown circumferential groove 5C (not illustrated).

As illustrated in FIG. 3, in the present embodiment, each inside middle lateral groove 6B includes a first portion 21, a second portion 22 and a third portion 23. The first portion 21 extends from the second opening 12 toward the inside shoulder circumferential groove 5D. The second portion 22 extends from the third opening 13 toward the inside crown circumferential groove 5C.

The first portion 21 and the second portion 22 are inclined with respect to the tyre circumferential direction. In the present embodiment, the first portion 21 and the second portion 22, with respect to the tyre circumferential direction, are inclined in an opposite direction (i.e., an intersecting direction) to the crown lateral grooves 6A.

The third portion 23 connects the first portion 21 and the second portion 22 in a crank manner. The third portion 23 is inclined with respect to the tyre circumferential direction.

In the present embodiment, each inside middle lateral groove 6B can form a crank shaped snow column, providing powerful snow traction. Further, the first portions 21, the second portions 22 and the third portions 23 have edge components in the tyre circumferential direction and the tyre axial direction, improving snow traction as well as cornering performance. Furthermore, the inside middle lateral grooves 6B can reduce air pumping noise when grounding, reducing pattern noise. In order to further improve the above-mentioned effect, an angle $\theta 2$ of the first portions 21 and the second portions 22 is preferably in a range of from 50 to 70 degrees with respect to the tyre circumferential direction. Further, an angle $\theta 3$ of the third portions 23 is preferably in a range of from 30 to 50 degrees with respect to the tyre circumferential direction.

In the present embodiment, the respective first openings 11 of the crown lateral grooves 6A are arranged in different locations in the tyre circumferential direction from the respective second openings 12 of the inside middle lateral grooves 6B so as not to face the respective second openings 12 in the tyre axial direction. Thus, the crown lateral grooves 6A and the inside middle lateral grooves 6B can stagger the timing of contact with and release from the ground with each other, resulting in reducing air pumping noise effectively when grounding. Therefore, the tyre 1 according to the present embodiment can reduce pattern noise. In order to further improve the above-mentioned effect, a minimum distance L1 in the tyre circumferential direction between the circumferentially adj acent first opening 11 and the second opening 12 is preferably in a range of from 3% to 7% of the tread width TW (shown in FIG. 1). Note that the minimum distance L1 is measured as a circumferential distance between a first intersection 24 and a second intersection 25, wherein the first intersection 24 is an intersection of the groove centerline of the crown lateral groove 6A and the first opening 11, and the second intersection 25 is an intersection of the groove centerline of the inside middle lateral groove 6B and the second opening 12.

Preferably, a sum of a total value of maximum groove widths W5 of the plurality of crown lateral grooves 6A and a total value of maximum groove widths W6 of the inside middle lateral grooves 6B is in a range of 30% to 40% of a circumferential length of the tread portion 2 (shown in FIG. 1). By setting the above-mentioned sum to equal to or more than 30% of the circumferential length, a total groove volume of the crown lateral grooves 6A and the inside middle lateral grooves 6B can be maintained sufficiently, and snow traction can be improved. On the other hand, by setting the above-mentioned sum to equal to or less than 40% of the circumferential length, an increase of air pumping noise can be suppressed. From these viewpoints, the above-mentioned sum is preferably equal to or more than 32% of the circumferential length, and is preferably equal to or less than 38% of the circumferential length. Note that the circumferential length of the tread portion is specified as a tyre circumference in the tyre equator C.

[Inside shoulder lateral grooves]

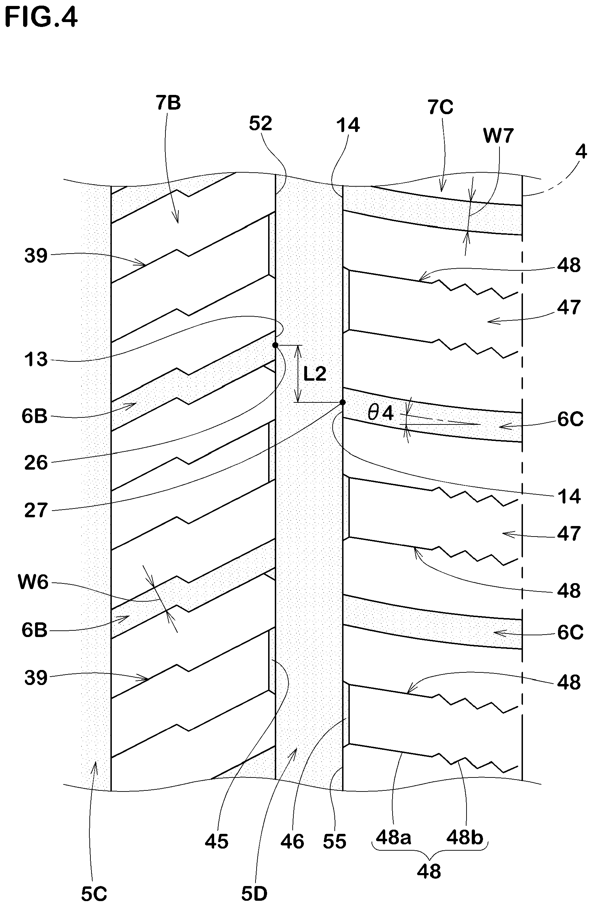

FIG. 4 illustrates a partial enlarged view of the inside middle land portion 7B and the inside shoulder land portion 7C. As illustrated in FIG. 4, the inside shoulder lateral grooves 6C extend from the inside shoulder circumferential groove 5D to the inside tread edge 4. The inside shoulder lateral grooves 6C are spaced in the tyre circumferential direction on the inside middle land portion 7B. The inside shoulder lateral grooves 6C have respective fourth openings 14 that open to the inside shoulder circumferential groove 5D.

Since the inside shoulder lateral grooves 6C connect the inside shoulder circumferential groove 5D and the inside tread edge 4, the inside shoulder land portion 7C can form axially long snow columns. Thus, the inside shoulder lateral grooves 6C can be helpful to improve snow traction. In addition, the inside shoulder lateral grooves 6C are provided on the inside tread edge 4 side which has a small effect on pattern noise. Thus, the inside shoulder lateral grooves 6C can reduce the effect of air pumping noise on the pattern noise.

In order to further improve the above-mentioned effect, the maximum groove width W7 of each inside shoulder lateral grooves 6C is preferably set in a range of about 2.0% to about 4.0% of the tread width TW (shown in FIG. 1). As illustrated in FIG. 2, a groove depth (the maximum groove depth) D7 of each inside shoulder lateral groove 6C is preferably in a range of 50% to 90% of the groove depth D1 of the inside shoulder circumferential groove 5D (not illustrated).

In the present embodiment, the inside shoulder lateral grooves 6C are curved in such a manner that an angle θ4 with respect to the tyre axial direction decreases continuously from the fourth openings 14 toward the inside tread edge 4. The inside shoulder lateral grooves 6C according to the present embodiment are inclined in an opposite direction (an intersecting direction) of the inside middle lateral grooves 6B (e.g., the first portions 21 and the second portions 22 shown in FIG. 3) with respect to the tyre circumferential direction. The inside shoulder lateral grooves 6C can provide edge components in the tyre circumferential direction and the tyre axial direction and form large snow columns in the tyre axial direction. Thus, snow traction as well as cornering performance can be improved. In order to further improve the effect, the angle θ4 is preferably in a range of 5 to 45 degrees.

In the present embodiment, the respective third openings 13 are arranged in different locations in the tyre circumferential direction from the respective fourth openings 14 so as not to face the respective fourth openings 14 in the tyre axial direction. Thus, the inside middle lateral grooves 6B and the inside shoulder lateral grooves 6C can stagger the timing of contact with and release from the ground with each other, resulting in reducing air pumping noise effectively when grounding. Therefore, the tyre 1 according to the present embodiment can reduce pattern noise. In order to further improve the above-mentioned effect, a minimum distance L2 in the tyre circumferential direction between the circumferentially adjacent third opening 13 and the fourth opening 14 is preferably in a range of from 4% to 8% of the tread width TW (shown in FIG. 1). Note that the minimum distance L2 is measured as a circumferential distance between a third intersection 26 and fourth intersection 27, wherein the third intersection 26 is an intersection of the groove centerline of the inside middle lateral grooves 6B and the third opening 13, and the fourth intersection 27 is an intersection of the groove centerline of the inside shoulder lateral grooves 6C and the fourth opening 14.

Preferably, a sum of a total value of maximum groove widths W7 of the plurality of inside shoulder lateral grooves 6C and a total value of maximum groove widths W6 of the inside middle lateral grooves 6B is in a range of 20% to 30% of the circumferential length of the tread portion 2. By setting the above-mentioned sum to equal to or more than 20% of the circumferential length of the tread portion, a total groove volume of the inside shoulder lateral grooves 6C and the inside middle lateral grooves 6B can be maintained sufficiently, and snow traction can be improved. By setting the above-mentioned sum to equal to or less than 30% of the circumferential length of the tread portion, an increase of air pumping noise can be suppressed. From these viewpoints, the above-mentioned sum is preferably equal to or more than 22% of the circumferential length, and is preferably equal to or less than 28% of the circumferential length of the tread portion.

[First outside middle lateral grooves]

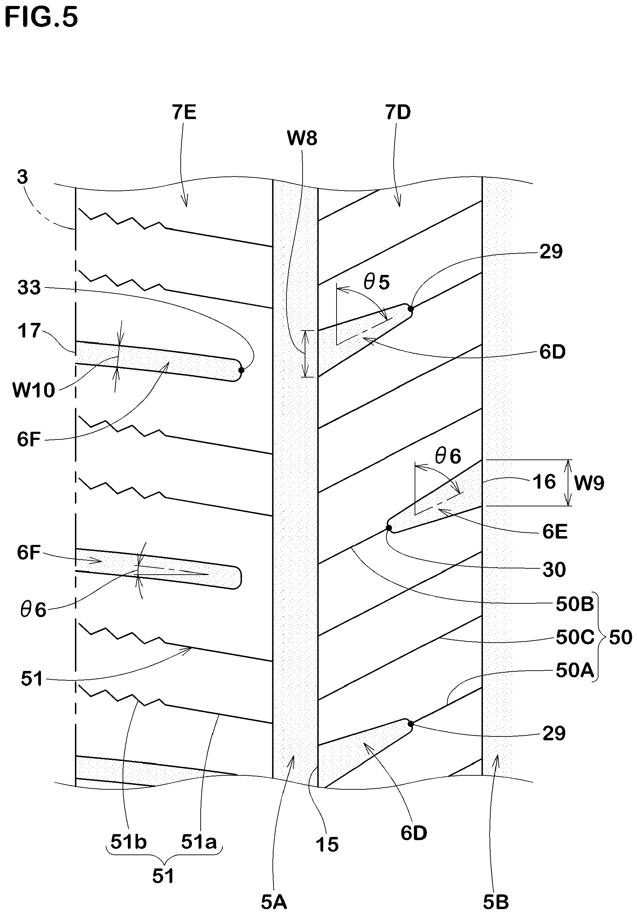

FIG. 5 illustrates a partial enlarged view of the outside middle land portion 7D and the outside shoulder land portion 7E. As illustrated in FIG. 5, the first outside middle lateral grooves 6D extend from the outside shoulder circumferential groove 5A and terminate within the outside middle land portion 7D. The first outside middle lateral grooves 6D are spaced in the tyre circumferential direction on the outside middle land portion 7D. The first outside middle lateral grooves 6D have respective fifth openings 15 that open to the outside shoulder circumferential groove 5A.

In the present embodiment, the first outside middle lateral grooves 6D, for example, have less groove volume than that of lateral grooves that connect the outside shoulder circumferential groove 5A and the outside crown circumferential groove 5B. Thus, the first outside middle lateral grooves 6D can reduce pumping noise when grounding on the outside tread edge 3 side, which has a large influence on the pattern noise. In addition, the first outside middle lateral grooves 6D can compact the snow column from the fifth openings 15 toward the inner equal edge 29 in the tyre axial direction, providing powerful snow traction.

In the present embodiment, a groove width of each first outside middle lateral groove 6D decreases from the fifth opening 15 to an axially inner end 29 thereof. Thus, the first outside middle lateral grooves 6D can compact snow firmly from the fifth openings 15 toward the axially inner ends 29, providing powerful snow traction more effectively.

Preferably, the maximum groove width W8 of each first outside middle lateral groove 6D is in a range of from 3.5% to 5.0% of the tread width TW (shown in FIG. 1). As illustrated in FIG. 2, a groove depth (the maximum groove depth) D8 of each first outside middle lateral groove 6D is preferably in a range of 50% to 90% of the groove depth D1 of the outside shoulder circumferential groove 5A (not illustrated).

As illustrated in FIG. 5, in the present embodiment, the first outside middle lateral grooves 6D are inclined at an angle with respect to the tyre axial direction. Such first outside middle lateral grooves 6D have edge components in the tyre circumferential direction and the tyre axial direction, improving snow traction as well as cornering performance. In addition, the first outside middle lateral grooves 6D, in a region between the fifth openings 15 and the inner ends 29, can stagger the timing of contact with and release from the ground. Thus, the first outside middle lateral grooves 6D can reduce air pumping noise when grounding on the outside tread edge 3 side which has a large influence on the pattern noise. As a result, the tyre 1 can reduce pattern noise. In order to further improve the effect, an angle θ5 of the first outside middle lateral grooves 6D is preferably in a range of 50 to 70 degrees with respect to the tyre circumferential direction.

[Second outside middle lateral grooves]

The second outside middle lateral grooves 6E extend from the outside crown circumferential groove 5B and terminate within the outside middle land portion 7D. The second outside middle lateral grooves 6E are spaced in the tyre circumferential direction on the outside middle land portion 7D. The second outside middle lateral grooves 6E have respective sixth openings 16 that open to the outside crown circumferential groove 5B.

In the present embodiment, the second outside middle lateral grooves 6E, for example, have less groove volume than that of lateral grooves that connect the outside crown circumferential groove 5B and the outside shoulder circumferential groove 5A. Thus, the second outside middle lateral grooves 6E can reduce air pumping noise when grounding on the outside tread edge 3 side which has a large influence on the pattern noise. In addition, the second outside middle lateral grooves 6E can compact snow columns from the sixth openings 16 toward the inner end 30 in the tyre axial direction, and can exert snow traction.

In the present embodiment, a groove width of each second outside middle lateral groove 6E decreases continuously from the sixth opening 16 to an axially inner end 30 thereof. Thus, the second outside middle lateral grooves 6E can compact snow columns more firmly from the sixth openings 16 toward the inner ends 30, and can effectively exert snow traction.

Preferably, the maximum groove width W9 of each second outside middle lateral groove 6E is set in the same range as the maximum groove width W8 of the first outside middle lateral grooves 6D. In addition, a groove depth (the maximum groove depth, and not illustrated) of each second outside middle lateral groove is preferably set in the same range as the groove depth D8 (shown in FIG. 2) of the first outside middle lateral grooves 6D.

In the present embodiment, the second outside middle lateral grooves 6E are inclined at an angle with respect to the tyre axial direction. Such second outside middle lateral grooves 6E have edge components in the tyre circumferential direction and the tyre axial direction, improving snow traction and cornering performance. Further, in the present embodiment, the second outside middle lateral grooves 6E are arranged in parallel with the first outside middle lateral grooves 6D. Thus, the second outside middle lateral grooves 6E can exhibit the edge component in the same direction as the first outside middle lateral grooves 6D, so that snow traction and cornering performance can be further improved.

The second outside middle lateral grooves 6E, in a region between the sixth openings 16 and the inner ends 30, can stagger the timing of contact with and release from the ground. Thus, the second outside middle lateral grooves 6E can reduce air pumping noise when grounding on the outside tread edge 3 side which has a large influence on the pattern noise. As a result, the tyre 1 can reduce pattern noise. In order to further improve the effect, an angle θ6 of the second outside middle lateral grooves 6E with respect to the tyre circumferential direction is preferably set in the same range as the angle θ5 of the first outside middle lateral grooves 6D.

In the present embodiment, the respective fifth openings 15 of the first outside middle lateral grooves 6D are arranged in different locations in the tyre circumferential direction from the respective sixth openings 16 of the second outside middle lateral grooves 6E. Thus, the first outside middle lateral grooves 6D and the second outside middle lateral grooves 6E are arranged alternately in the tyre circumferential direction, and the first outside middle lateral grooves 6D and the second outside middle lateral grooves 6E can stagger the timing of contact with and release from the ground with each other. As a result, the first outside middle lateral grooves 6D and the second outside middle lateral grooves 6E can effectively reduce air pumping sound when grounding on the outside tread edge 3 side which has a large influence on the pattern noise. Therefore, the tyre 1 according to the present embodiment can reduce pattern noise.

[Outside shoulder lateral grooves]

The outside shoulder lateral grooves 6F extend from the outside tread edge 3 and terminate within the outside shoulder land portion 7E. The outside shoulder lateral grooves 6F are spaced in the tyre circumferential direction on the outside shoulder land portion 7E. The outside shoulder lateral grooves 6F have respective seventh openings 17 that open to the outside tread edge 3.

The outside shoulder lateral grooves 6F, for example, have less groove volume than that of lateral grooves that connect the outside tread edge 3 and the outside shoulder circumferential groove 5A. Thus, the outside shoulder lateral grooves 6F can reduce air pumping sound when grounding on the arranged outside tread edge 3 side which has a large influence on the pattern noise. In addition, the outside shoulder lateral grooves 6F can compact the snow columns from the seventh openings 17 toward axially inner end 33 thereof in the tyre axial direction, and can exert powerful snow traction.

In the present embodiment, the maximum groove width W10 of each outside shoulder lateral groove 6F is smaller than the maximum groove width W7 (shown in FIG. 4) of each inside shoulder lateral groove. Thus, the outside shoulder lateral grooves 6F can effectively reduce air pumping sound when grounding on the outside tread edge 3 side which has a large influence on the pattern noise.

In order to further improve the above-mentioned effect, the maximum groove width W10 of each outside shoulder lateral groove 6F is preferably in a range of from 1.0% to 2.5% of the tread width TW (shown in FIG. 1). As illustrated in FIG. 2, a groove depth D10 of the outside shoulder lateral grooves 6F is preferably in a range of 50% to 90% of the groove depth D1 of the outside shoulder circumferential groove 5A (not illustrated).

As illustrated in FIG. 5, in the present embodiment, the outside shoulder lateral grooves 6F are inclined at an angle with respect to the tyre axial direction. In the present embodiment, the outside shoulder lateral grooves 6F are inclined in an opposite direction (intersecting direction) to the first outside middle lateral grooves 6D with respect to the tyre circumferential direction. Such outside shoulder lateral grooves 6F can form large snow columns extending in the tyre axial direction while exhibiting the edge effect of the tyre circumferential direction and the tyre axial direction, and provide powerful snow traction and better cornering performance. In order to exert such an effect effectively, the angle θ6 is preferably in a range of 5 to 45 degrees.

In the present embodiment, as shown in FIGS, 3 to 5, the first openings 11, the second openings 12, the third openings 13, the fourth openings 14, the fifth openings 15, the sixth openings 16, and the seventh openings 17 are arranged in different locations in the tyre circumferential direction from each other. Thus, the crown lateral grooves 6A, the inside middle lateral grooves 6B, the inside shoulder lateral grooves 6C, the first outside middle lateral grooves 6D, the second outside middle lateral grooves 6E and the outside shoulder lateral grooves 6F can stagger the timing of contact with and release from the ground from each other. Therefore, the tyre 1 according to the present embodiment can reduce air pumping noise when grounding effectively so that the pattern noise can be reduced effectively.

[Crown land portion]

As illustrated in FIG. 3, in the present embodiment, the crown land portion 7A is defined between the outside crown circumferential groove 5B and the inside crown circumferential groove 5C. The crown land portion 7A is provided with a plurality of crown sipes 36. The crown sipes 36 can increase a total edge length on the crown land portion 7A, improving snow traction.

As used herein, "sipe" means an incision that has a width less than 1.5 mm. Preferably, a width of sipe, for example, is in a range of 0.5 to 1.0 mm. A depth of sipe (not illustrated) is preferably in a range of 30% to 70% of the groove depth D1 of the outside crown circumferential groove 5B (not illustrated).

In the present embodiment, the crown sipes 36 include first crown sipes 36A extending from the inner ends 18 of the crown lateral grooves 6A to the outside crown circumferential groove 5B, and second crown sipes 36B extending from the inside crown circumferential groove 5C to the outside crown circumferential groove 5B.

In the present embodiment, the first crown sipes 36A and the second crown sipes 36B are inclined in parallel with the crown lateral grooves 6A. The first crown sipes 36A and the second crown sipes 36B have edge components in the tyre circumferential direction and the tyre axial direction, improving snow traction and cornering performance. In addition, the first crown sipes 36A can increase deformation of the crown lateral grooves 6A during running (when coming into contact with the ground), and can efficiently discharge snow and water from the crown lateral grooves 6A, thus enhancing snow traction.

[Inside middle land portion]

The inside middle land portion 7B is defined between the inside shoulder circumferential groove 5D and the inside crown circumferential groove 5C. In the present embodiment, the inside middle land portion 7B is divided into a plurality of inside middle blocks 38 by the inside middle lateral grooves 6B.

Each inside middle block 38 is provided with one or more inside middle sipes 39 that connect the inside shoulder circumferential groove 5D and the inside crown circumferential groove 5C. The inside middle sipes 39 can increase an edge length of the inside middle block 38, improving snow traction.

In the present embodiment, the inside middle sipes 39, as with the inside middle lateral grooves 6B, each include a first portion 41, a second portion 42 and a third portion 43 which are arranged in a crank manner. The first portion 41 are inclined in parallel with the first portions 21 of the inside middle lateral grooves 6B. The second portion 42 is inclined in parallel with the second portions 22 of the inside middle lateral grooves 6B. The third portion 43 is inclined in parallel with the third portions 23 of the inside middle lateral grooves 6B. Each inside middle sipe 39, as with the inside middle lateral grooves 6B, can provide a crank shaped edge component that can improve snow traction.

In the present embodiment, the inside middle blocks 38 are provided with first recesses 45 on sidewalls 52 thereof on the inside shoulder circumferential groove 5D side. In the present embodiment, the first recesses 45 each have both circumferential ends to which a pair of the inside middle sipes 39 and 39 is connected. The first recesses 45 each can not only form a large snow column in conjunction with the inside shoulder circumferential groove 5D, but also help to discharge the snow column from the inside shoulder circumferential groove 5D.

In addition, the inside middle blocks 38 are provided with chamfer portions 53 on block corners between the sidewalls 52 and the inside middle lateral grooves 6B. Such chamfer portions 53 can help to discharge snow columns from the inside middle lateral grooves 6B while suppressing damage of the block corners.

[Inside shoulder land portion]

As illustrated in FIG. 4, the inside shoulder land portion 7C is defined between the inside shoulder circumferential groove 5D and the inside tread edge 4. In the present embodiment, the inside shoulder land portion 7C is divided into a plurality of inside shoulder blocks 47 by the inside shoulder lateral grooves 6C.

Each inside shoulder block 47 is provided with a plurality of inside shoulder sipes 48 extending from the inside shoulder circumferential groove 5D to the inside tread edge 4. Such inside shoulder sipes 48 can increase an edge length of each inside shoulder block 47, improving snow traction.

In the present embodiment, the inside shoulder sipes 48 are inclined at an angle with respect to the tyre axial direction (e.g., parallel with the inside shoulder lateral grooves 6C). Such inside shoulder sipes 48 can provide edge components in the tyre circumferential direction and the tyre axial direction, improving snow traction and cornering performance.

In the present embodiment, each inside shoulder sipe 48 includes a first portion 48a extending straight and a second portion 48b extending in a zigzag manner. The second portion 48b has a pair of sipe walls that can engage with each other when grounding, maintaining rigidity of the inside shoulder land portion 7C and improving snow traction.

In the present embodiment, the inside shoulder blocks 47 are provided with second recesses 46 on sidewalls 55 thereof on the inside shoulder circumferential groove 5D side. In the present embodiment, each second recesses 46 has a pair of circumferential both ends to which a pair of the inside shoulder sipes 48 and 48 is connected. Such second recesses 46 in conjunction with the first recesses 45 of the inside middle blocks 38 and the inside shoulder circumferential groove 5D can not only form large snow columns, but also help to discharge the snow columns from the inside shoulder circumferential groove 5D. In order to further improve the above-mentioned effect, the second recesses 46 are preferably arranged in different locations in the tyre circumferential direction from the first recesses 45.

[Outside middle land portion]

As illustrated in FIG. 5, the outside middle land portion 7D is defined between the outside shoulder circumferential groove 5A and the outside crown circumferential groove 5B. The outside middle land portion 7D is provided with a plurality of outside middle sipes 50. The outside middle sipes 50 can increase a total edge length on the outside middle land portion 7D, improving snow traction.

In the present embodiment, the outside middle sipes 50 include first outside middle sipes 50A, second outside middle sipes 50B, and third outside middle sipes 50C. The first outside middle sipes 50A extend from the inner ends 29 of the first outside middle lateral grooves 6D to the outside crown circumferential groove 5B. The second outside middle sipes 50B extend from the inner ends 30 of the second outside middle lateral grooves 6E to the outside shoulder circumferential groove 5A. The third outside middle sipes 50C extend from the outside shoulder circumferential groove 5A to the outside crown circumferential groove 5B.

In the present embodiment, the first outside middle sipes 50A, the second outside middle sipes 50B and the third outside middle sipes 50C are inclined in parallel with the first outside middle lateral grooves 6D and the second outside middle lateral grooves 6E. The first outside middle sipes 50A, the second outside middle sipes 50B and the third outside middle sipes 50C have edge components in the tyre circumferential direction and the tyre axial direction, improving snow traction and cornering performance.

The first outside middle sipes 50A can increase the deformation of the first outside middle lateral grooves 6D when running (when coming into contact with the ground), and can efficiently discharge snow and water from the first outside middle lateral grooves 6D. In addition, the second outside middle sipes 50B can increase the deformation of the second outside middle lateral grooves 6E when running (when coming into contact with the ground), and can efficiently discharge snow and water from the second outside middle lateral grooves 6E. Thus, the first outside middle sipes 50A and the second outside middle sipes 50B can improve snow traction.

As illustrated in FIG. 1, a land ratio of the outside middle land portion 7D is preferably in a range of 80% to 120% of a land ratio of the inside middle land portion 7B. As used herein, a land ratio of one land portion 7 is a ratio (S / Sa) of an area S of a ground contacting surface of the land portion 7 to an area Sa of a virtual ground contacting surface obtained by filling all the grooves at the land portion 7.

When the land ratio of the outside middle land portion 7D is set equal to or more than 80% of the land ratio of the inside middle land portion 7B, rigidity of the outside middle land portion 7D can be maintained, and snow traction and cornering performance can be exerted. Further, the outside middle land portion 7D, which has a relatively large effect on pattern noise with respect to the inside middle land portion 7B, is maintained at a high land ratio. Thus, it is possible to prevent the negative proportions of the first outside middle lateral grooves 6D and the second outside middle lateral grooves 6E from increasing. As a result, a decrease in snow traction and steering stability can be suppressed while reducing pattern noise.

When the land ratio of the outside middle land portion 7D is set equal to less than 120% of the inside middle land portion 7B, it is possible to prevent the rigidity difference from the inside middle land portion 7B from becoming large while preventing the rigidity of the outside middle land portion 7D from becoming higher than necessary. From this point of view, the land ratio of the outside middle land portion 7D is preferably equal to or more than 90% of the land ratio of the inside middle land portion 7B, and preferably equal to or less than 110%.

[Outside shoulder land portion]

As illustrated in FIG. 5, the outside shoulder land portion 7E is defined between the outside shoulder circumferential groove 5A and the outside tread edge 3. The outside shoulder land portion 7E is provided with a plurality of outside shoulder sipes 51 extending from the outside shoulder circumferential groove 5A to the outside tread edge 3. The outside shoulder sipes 51 can increase a total edge length on the outside shoulder land portion 7E, improving snow traction.

In the present embodiment, the outside shoulder sipes 51 are inclined with respect to the tyre axial direction (e.g., in parallel with the outside shoulder lateral grooves 6F). Such outside shoulder sipes 51 have edge components in the tyre circumferential direction and the tyre axial direction, improving snow traction and cornering performance.

In the present embodiment, each outside shoulder sipe 51 includes a first portion 51a extending straight and a second portion 51b extending in a zigzag manner. The second portion 51b has a pair of sipe walls that can engage with each other when grounding, maintaining rigidity of the outside shoulder land portion 7E and improving snow traction.

As illustrated in FIG. 1, a land ratio of the outside shoulder land portion 7E is preferably in a range of 100% to 150% of a land ratio of the inside shoulder land portion 7C. When the land ratio of the outside shoulder land portion 7E is set equal to or more than 100% of the land ratio of the inside shoulder land portion 7C, rigidity of the outside shoulder land portion 7E can be maintained, and snow traction and cornering performance can be exerted. Further, the outside shoulder land portion 7E, which has a relatively large effect on pattern noise with respect to the cornering inside shoulder land portion 7C, is maintained at a high land ratio. Thus, it is possible to prevent the negative proportions of the outside shoulder lateral grooves 6F from increasing. As a result, a decrease in snow traction and steering stability can be suppressed while reducing pattern noise.

When the land ratio of the outside shoulder land portion 7E is set equal to or less than 150% of the land ratio of the inside shoulder land portion 7C, it is possible to prevent the rigidity difference from the inside shoulder land portion 7C from becoming large while preventing the rigidity of the outside shoulder land portion 7E from becoming higher than necessary. From this point of view, the land ratio of the outside shoulder land portion 7E is preferably equal to or more than 110% of the land ratio of the inside shoulder land portion 7C, and preferably equal to or less than 140%.

While the particularly preferable embodiments in accordance with the present invention have been described in detail, the present invention is not limited to the illustrated embodiments, but can be modified and carried out in various aspects within the scope of the claims.

[Example]

[Example A]

Tires (Examples 1 to 4) having the basic structure shown in FIG. 1 were prototyped based on the details shown in Table 1. The tyres have the groove widths W1, W2, W3 and W4 of the outside shoulder circumferential groove, the outside crown circumferential groove, the inside crown circumferential groove and the inside shoulder circumferential groove, respectively, satisfying the following relation:

$$W1 < W2 < W3 < W4.$$

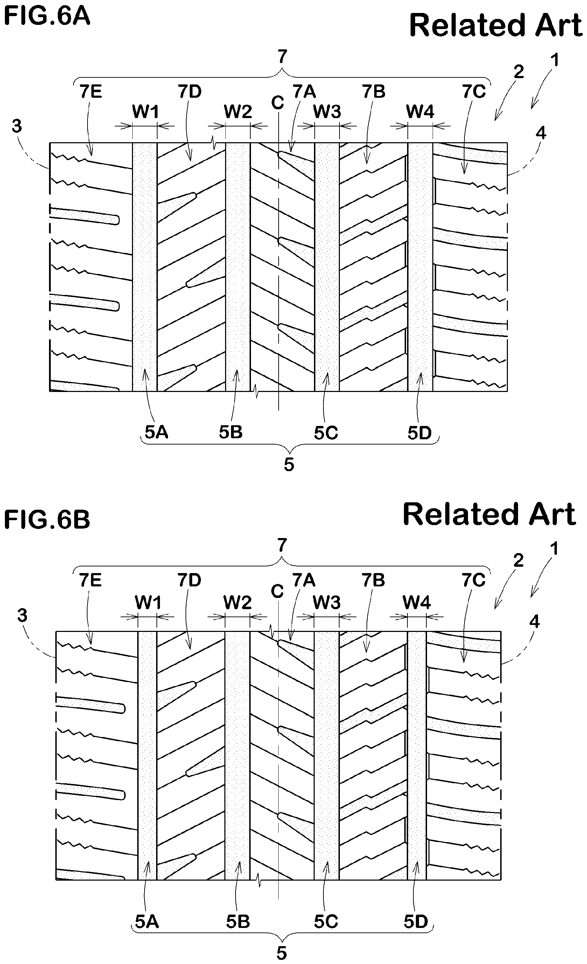

For comparison, as illustrated in FIG. 6A, a tyre whose groove widths satisfy the relation of "W1 = W2 = W3 = W4" (Comparative Example 1), and as illustrated in FIG. 6B, a tyre whose groove widths satisfy the relation of "W2 = W3 > W1 = W4" (Comparative Example 2) were also prototyped.

Then, pattern noise and snow traction were evaluated for each prototype tyre. The common specifications and test methods are as follows. The test results are shown in Table 1.

Tire size: 225/65R17
Rim size: 17x6.5J
Inner pressure: 230 kPa
Test vehicle: four-wheel-drive vehicle (2000cc)
Tread width TW: 210 mm
Each circumferential groove depth D1: 8.5 mm
Lateral groove depths D5 and D7 to D10: 6.8 mm
Lateral groove depth D6: 6.0 mm
(Total value of maximum groove widths of crown lateral grooves + total value of maximum groove widths of inside middle lateral grooves) / circumferential length of tread portion: 35%
(Total value of maximum groove widths of inside shoulder lateral grooves + total value of maximum groove widths of inside middle lateral grooves) / circumferential length of tread portion: 25%
Land ratio of outside middle land portion / land ratio of inside middle land portion: 100%
Land ratio of outside shoulder land portion / land ratio of inside shoulder land portion: 110%

Pattern noise test:

Each test tyre was mounted on the above rim, and after the internal pressure was applied, it was mounted on all the wheels of the test vehicle. Then, the pattern noise when a test driver got on board and ran on a dry paved road surface was evaluated by the sensuality of the test driver. The test results are represented by an index with Comparative Example 1 as 100. The larger the value, the smaller the pattern noise and the better the noise performance.

Snow traction test:

Each test tyre was mounted on the above rim, and after the internal pressure was applied, it was mounted on all the wheels of the test vehicle. Then, the distance when a test driver got on board and accelerated from 5 mph to 20 mph on a snow-packed course was measured. The test results are represented by an index with Comparative Example 1 as 100, and the larger the value, the better the snow traction.

[Table 1]

| | Ref. 1 | Ref. 2 | Ex. 1 | Ex. 2 | Ex. 3 | Ex. 4 |
|---|---|---|---|---|---|---|
| Tread portion development view | FIG. 6A | FIG. 6B | FIG. 1 | FIG. 1 | FIG. 1 | FIG. 1 |
| Misalignment of first and second openings | presence | presence | presence | none | presence | presence |
| Misalignment of third and fourth openings | presence | presence | presence | presence | none | presence |
| Misalignment of fifth and sixth openings | presence | presence | presence | presence | presence | none |
| Pattern noise performance (index) | 100 | 105 | 130 | 120 | 122 | 115 |
| Snow traction performance (index) | 100 | 95 | 120 | 125 | 123 | 127 |
| Total evaluation (index) | 200 | 200 | 250 | 245 | 245 | 242 |

As a result of the test, it is confirmed that the example tyres can reduce pattern noise while maintaining snow traction compared to the comparative examples. Furthermore, the example 1 having the misalignment of the first openings and the second openings, the misalignment of the third openings and the fourth openings, and the misalignment of the fifth openings and the sixth openings can significantly reduce pattern noise compared to the other examples.

[Example B]

Tires (Examples 1 and 5 to 12) having the basic structure shown in FIG. 1 were prototyped based on the details shown in Table 2. The tyres have the groove widths W1, W2, W3 and W4 of the outside shoulder circumferential groove, the outside crown circumferential groove, the inside crown circumferential groove and the inside shoulder circumferential groove, respectively, satisfying the following relation:

$$W1 < W2 < W3 < W4.$$

The test results are shown in Table 2. The common specifications are the same as in Example A, except for the specifications in Table 2.

[Table 2]

| | Ex. 5 | Ex. 6 | Ex. 1 | Ex. 7 | Ex. 8 | Ex. 9 | Ex. 10 | Ex. 11 | Ex. 12 |
|---|---|---|---|---|---|---|---|---|---|
| (Total value of maximum groove widths of crown lateral grooves + total value of maximum groove widths of inside middle lateral grooves) / circumferential length of tread portion (%) | 25 | 30 | 35 | 40 | 45 | 35 | 35 | 35 | 35 |
| (Total value of maximum groove widths of inside shoulder lateral grooves + total value of maximum groove widths of inside middle lateral grooves) / circumferential length of tread portion (%) | 25 | 25 | 25 | 25 | 25 | 18 | 20 | 30 | 32 |
| Pattern noise performance (index) | 134 | 131 | 130 | 127 | 120 | 133 | 132 | 128 | 122 |
| Snow traction performance (index) | 112 | 118 | 120 | 122 | 124 | 110 | 117 | 121 | 125 |
| Total evaluation (index) | 246 | 249 | 250 | 249 | 244 | 243 | 249 | 249 | 247 |

As a result of the test, it is confirmed that Examples 1, 6 and 7, in which the ratio of the sum of the maximum groove widths of the crown lateral grooves and the inside middle lateral grooves to the circumferential of the tread portion falls in a preferable range, can reduce the pattern noise while maintaining snow traction compared to Examples 5 and 8. It is also confirmed that Examples 1, 10 and 11, in which the ratio of the sum of the maximum groove widths of the inside shoulder lateral grooves and the inside middle lateral grooves to the circumferential of the tread portion falls in a preferable range, can reduce the pattern noise while maintaining snow traction compared to Examples 9 and 12.

[Example C]

Tires (Examples 1 and 13 to 20) having the basic structure shown in FIG. 1 were prototyped based on the details shown in Table 3. The tyres have the groove widths W1, W2, W3 and W4 of the outside shoulder circumferential groove, the outside crown circumferential groove, the inside crown circumferential groove and the inside shoulder circumferential groove, respectively, satisfying the following relation:

$$W1 < W2 < W3 < W4.$$

The test results are shown in Table 3. The common specifications are the same as in Example A, except for the specifications in Table 3.

[Table 3]

| | Ex. 13 | Ex. 14 | Ex. 1 | Ex. 15 | Ex. 16 | Ex. 17 | Ex. 18 | Ex. 19 | Ex. 20 |
|---|---|---|---|---|---|---|---|---|---|
| Land ratio of outside middle land portion / land ratio of inside middle land portion (%) | 70 | 80 | 100 | 120 | 130 | 100 | 100 | 100 | 100 |
| Land ratio of outside shoulder land portion / land ratio of inside shoulder land portion (%) | 110 | 110 | 110 | 110 | 110 | 90 | 100 | 150 | 160 |
| Pattern noise performance (index) | 122 | 128 | 130 | 131 | 134 | 121 | 127 | 132 | 134 |

(continued)

|  | Ex. 13 | Ex. 14 | Ex. 1 | Ex. 15 | Ex. 16 | Ex. 17 | Ex. 18 | Ex. 19 | Ex. 20 |
|---|---|---|---|---|---|---|---|---|---|
| Snow traction performance (index) | 112 | 118 | 120 | 118 | 114 | 113 | 118 | 117 | 114 |
| Total evaluation (index) | 234 | 246 | 250 | 249 | 248 | 234 | 245 | 249 | 248 |

As a result of the test, it is confirmed that Examples 1, 14 and 15, in which the ratio of the land ratio of the outside middle land portion to the land ratio of the inside middle land portion falls within the preferable range, can reduce the pattern noise while maintaining snow traction compared to Examples 13 and 16. It is also confirmed that Examples 1, 18 and 19, in which the ratio of the land ratio of the outside shoulder land portion to the land ratio of the inside shoulder land portion falls within the preferable range, can reduce the pattern noise while maintaining snow traction compared to Examples 17 and 20.

**Claims**

1.  A tyre (1) comprising:

a tread portion (2) having a designated mounting direction to a vehicle, the tread portion (2) comprising an outside tread edge (3) located outwardly of a vehicle when being mounted to the vehicle, an inside tread edge (4) located inwardly of a vehicle when being mounted to the vehicle, a plurality of circumferential grooves (5) extending continuously in a tyre (1) circumferential direction between the outside tread edge (3) and the inside tread edge (4), and a plurality of lateral grooves (6) extending in a direction intersecting the plurality of circumferential grooves (5), wherein
the plurality of circumferential grooves (5) comprises an outside shoulder circumferential groove (5A), an outside crown circumferential groove (5B), an inside crown circumferential groove (5C) and an inside shoulder circumferential groove (5D) which are arranged in this order from an outside tread edge side to an inside tread edge side, and
a groove width W1 of the outside shoulder circumferential groove (5A), a groove width W2 of the outside crown circumferential groove (5B), a groove width W3 of the inside crown circumferential groove (5C) and a groove width W4 of the inside shoulder circumferential groove (5D) satisfy the following relation:

$$W1 < W2 < W3 < W4,$$

wherein
the tread portion (2) comprises an inside middle land portion (7B) defined between the inside shoulder circumferential groove (5D) and the inside crown circumferential groove (5C),
the plurality of lateral grooves (6) comprises a plurality of inside middle lateral grooves (6B) extending from the inside shoulder circumferential groove (5D) to the inside crown circumferential groove (5C),
the tread portion (2) comprises a crown land portion (7A) defined between the outside crown circumferential groove (5B) and the inside crown circumferential groove (5C), and
the plurality of lateral grooves (6) comprises a plurality of crown lateral grooves (6A) extending from the inside crown circumferential groove (5C) and terminating within the crown land portion (7A),
**characterized in that**
a sum of a total value of maximum groove widths W5 of the plurality of crown lateral grooves (6A) and a total value of maximum groove widths W6 of the inside middle lateral grooves (6B) is in a range of 30% to 40% of a circumferential length of the tread portion (2).

2.  The tyre (1) according to claim 1, wherein

the plurality of crown lateral grooves (6A) comprises first openings (11) that open to the inside crown circumferential groove (5C),
the plurality of inside middle lateral grooves (6B) comprises second openings (12) that open to the inside crown circumferential groove (5C), and

the respective first openings (11) are arranged in different locations in the tyre (1) circumferential direction from the respective second openings (12) so as not to face the respective second openings (12) in a tyre axial direction.

3. The tyre (1) according to claim 1 or 2, wherein

the tread portion (2) comprises an inside shoulder land portion (7C) defined between the inside shoulder circumferential groove (5D) and the inside tread edge (4), and
the plurality of lateral grooves (6) comprises a plurality of inside shoulder lateral grooves (6C) extending from the inside shoulder circumferential groove (5D) to the inside tread edge (4).

4. The tyre (1) according to claim 3, wherein

the plurality of inside middle lateral grooves (6B) comprises third openings (13) that open to the inside shoulder circumferential groove (5D),
the plurality of inside shoulder lateral grooves (6C) comprises fourth openings (14) that open to the inside shoulder circumferential groove (5D), and
the respective third openings (13) are arranged in different locations in the tyre (1) circumferential direction from the respective fourth openings (14) so as not to face the respective fourth openings (14) in a tyre axial direction.

5. The tyre (1) according to claim 3 or 4, wherein
a sum of a total value of maximum groove widths of the plurality of inside shoulder lateral grooves (6C) and a total value of maximum groove widths of the inside middle lateral grooves (6B) is in a range of 20% to 30% of a circumferential length of the tread portion (2).

6. The tyre (1) according to any one of claims 1 to 5, wherein

the tread portion (2) comprises an outside middle land portion (7D) defined between the outside shoulder circumferential groove (5A) and the outside crown circumferential groove (5B), and
the plurality of lateral grooves (6) comprises a plurality of first outside middle lateral grooves (6D) extending from the outside shoulder circumferential groove (5A) and terminating within the outside middle land portion (7D).

7. The tyre (1) according to claim 6, wherein
the plurality of lateral grooves (6) comprises a plurality of second outside middle lateral grooves (6E) extending from the outside crown circumferential groove (5B) and terminating within the outside middle land portion (7D).

8. The tyre (1) according to claim 7, wherein

the plurality of first outside middle lateral grooves (6D) comprises fifth openings (15) that open to the outside shoulder circumferential groove (5A),
the second outside middle lateral grooves (6E) comprises sixth openings (16) that open to the outside crown circumferential groove (5B), and
the respective fifth openings (15) are arranged in different locations in the tyre (1) circumferential direction from the respective sixth openings (16).

9. The tyre (1) according to any one of claims 1 to 8, wherein

the tread portion (2) comprises an outside middle land portion (7D) defined between the outside shoulder circumferential groove (5A) and the outside crown circumferential groove (5B), and an inside middle land portion (7B) defined between the inside shoulder circumferential groove (5D) and the inside crown circumferential groove (5C), and
a land ratio of the outside middle land portion (7D) is in a range of 80% to 120% of a land ratio of the inside middle land portion (7B).

10. The tyre (1) according to any one of claims 1 to 9, wherein

the tread portion (2) comprises an outside shoulder land portion (7E) defined between the outside shoulder circumferential groove (5A) and the outside tread edge (3), and an inside shoulder land portion (7C) defined between the inside shoulder circumferential groove (5D) and the inside tread edge (4), and

a land ratio of the outside shoulder land portion (7E) is in a range of 100% to 150% of a land ratio of the inside shoulder land portion (7C).

**Patentansprüche**

1. Reifen (1) mit:

   einem Laufflächenabschnitt (2), der eine vorgesehene Montagerichtung an einem Fahrzeug hat, wobei der Laufflächenabschnitt (2) eine äußere Laufflächenkante (3), die sich nach außerhalb eines Fahrzeugs befindet, wenn sie an dem Fahrzeug montiert ist, eine innere Laufflächenkante (4), die sich nach innerhalb eines Fahrzeugs befindet, wenn sie an dem Fahrzeug montiert ist, eine Vielzahl von Umfangsrillen (5), die sich kontinuierlich in einer Umfangsrichtung des Reifens (1) zwischen der äußeren Laufflächenkante (3) und der inneren Laufflächenkante (4) erstrecken, und eine Vielzahl von Querrillen (6) hat, die sich in einer Richtung erstrecken, die die Vielzahl von Umfangsrillen (5) schneidet, wobei
   die Vielzahl von Umfangsrillen (5) eine äußere Schulterumfangsrille (5A), eine äußere Kronenumfangsrille (5B), eine innere Kronenumfangsrille (5C) und eine innere Schulterumfangsrille (5D) aufweist, die in dieser Reihenfolge von einer Seite der äußeren Laufflächenkante zu einer Seite der inneren Laufflächenkante angeordnet sind, und
   eine Rillenbreite W1 der äußeren Schulterumfangsrille (5A), eine Rillenbreite W2 der äußeren Kronenumfangsrille (5B), eine Rillenbreite W3 der inneren Kronenumfangsrille (5C) und eine Rillenbreite W4 der inneren Schulterumfangsrille (5D) die folgende Beziehung erfüllen:

$$W1 < W2 < W3 < W4,$$

   wobei
   der Laufflächenabschnitt (2) einen inneren mittleren Landabschnitt (7B) aufweist, der zwischen der inneren Schulterumfangsrille (5D) und der inneren Kronenumfangsrille (5C) definiert ist,
   die Vielzahl von Querrillen (6) eine Vielzahl von inneren mittleren Querrillen (6B) aufweist, die sich von der inneren Schulterumfangsrille (5D) zu der inneren Kronenumfangsrille (5C) erstrecken,
   der Laufflächenabschnitt (2) einen Kronenlandabschnitt (7A) aufweist, der zwischen der äußeren Kronenumfangsrille (5B) und der inneren Kronenumfangsrille (5C) definiert ist, und
   die Vielzahl von Querrillen (6) eine Vielzahl von Kronenquerrillen (6A) aufweist, die sich von der inneren Kronenumfangsrille (5C) erstrecken und innerhalb des Kronenlandabschnitts (7A) enden,
   **dadurch gekennzeichnet, dass**
   eine Summe eines Gesamtwerts von maximalen Rillenbreiten W5 der Vielzahl von Kronenquerrillen (6A) und eines Gesamtwerts von maximalen Rillenbreiten W6 der inneren mittleren Querrillen (6B) in einem Bereich von 30 % bis 40 % einer Umfangslänge des Laufflächenabschnitts (2) liegt.

2. Reifen (1) nach Anspruch 1, wobei

   die Vielzahl von Kronenquerrillen (6A) erste Öffnungen (11) aufweist, die zu der inneren Kronenumfangsrille (5C) öffnen,
   die Vielzahl von inneren mittleren Querrillen (6B) zweite Öffnungen (12) aufweist, die zu der inneren Kronenumfangsrille (5C) öffnen, und
   die jeweiligen ersten Öffnungen (11) an unterschiedlichen Stellen in der Umfangsrichtung des Reifens (1) von den jeweiligen zweiten Öffnungen (12) angeordnet sind, um den jeweiligen zweiten Öffnungen (12) in einer axialen Richtung des Reifens nicht zugewandt zu sein.

3. Reifen (1) nach Anspruch 1 oder 2, wobei

   der Laufflächenabschnitt (2) einen inneren Schulterlandabschnitt (7C) aufweist, der zwischen der inneren Schulterumfangsrille (5D) und der inneren Laufflächenkante (4) definiert ist, und
   die Vielzahl von Querrillen (6) eine Vielzahl von inneren Schulterquerrillen (6C) aufweist, die sich von der inneren Schulterumfangsrille (5D) zu der inneren Laufflächenkante (4) erstrecken.

4. Reifen (1) nach Anspruch 3, wobei

die Vielzahl von inneren mittleren Querrillen (6B) dritte Öffnungen (13) aufweist, die zu der inneren Schulterumfangsrille (5D) öffnen,

die Vielzahl von inneren Schulterquerrillen (6C) vierte Öffnungen (14) aufweist, die zu der inneren Schulterumfangsrille (5D) öffnen, und

die jeweiligen dritten Öffnungen (13) an unterschiedlichen Stellen in der Umfangsrichtung des Reifens (1) von den jeweiligen vierten Öffnungen (14) angeordnet sind, um den jeweiligen vierten Öffnungen (14) in einer axialen Richtung des Reifens nicht zugewandt zu sein.

5. Reifen (1) nach Anspruch 3 oder 4, wobei

eine Summe eines Gesamtwerts von maximalen Rillenbreiten der Vielzahl von inneren Schulterquerrillen (6C) und eines Gesamtwerts von maximalen Rillenbreiten der inneren mittleren Querrillen (6B) in einem Bereich von 20 % bis 30 % einer Umfangslänge des Laufflächenabschnitts (2) liegt.

6. Reifen (1) nach einem der Ansprüche 1 bis 5, wobei

der Laufflächenabschnitt (2) einen äußeren mittleren Landabschnitt (7D) aufweist, der zwischen der äußeren Schulterumfangsrille (5A) und der äußeren Kronenumfangsrille (5B) definiert ist, und

die Vielzahl von Querrillen (6) eine Vielzahl von ersten äußeren mittleren Querrillen (6D) aufweist, die sich von der äußeren Schulterumfangsrille (5A) erstrecken und innerhalb des äußeren mittleren Landabschnitts (7D) enden.

7. Reifen (1) nach Anspruch 6, wobei

die Vielzahl von Querrillen (6) eine Vielzahl von zweiten äußeren mittleren Querrillen (6E) aufweist, die sich von der äußeren Kronenumfangsrille (5B) erstrecken und innerhalb des äußeren mittleren Landabschnitts (7D) enden.

8. Reifen (1) nach Anspruch 7, wobei

die Vielzahl von ersten äußeren mittleren Querrillen (6D) fünfte Öffnungen (15) aufweist, die zu der äußeren Schulterumfangsrille (5A) öffnen,

die zweiten äußeren mittleren Querrillen (6E) sechste Öffnungen (16) aufweist, die zu der äußeren Kronenumfangsrille (5B) öffnen, und

die jeweiligen fünften Öffnungen (15) an unterschiedlichen Stellen in der Umfangsrichtung des Reifens (1) von den jeweiligen sechsten Öffnungen (16) angeordnet sind.

9. Reifen (1) nach einem der Ansprüche 1 bis 8, wobei

der Laufflächenabschnitt (2) einen äußeren mittleren Landabschnitt (7D), der zwischen der äußeren Schulterumfangsrille (5A) und der äußeren Kronenumfangsrille (5B) definiert ist, und einen inneren mittleren Landabschnitt (7B) aufweist, der zwischen der inneren Schulterumfangsrille (5D) und der inneren Kronenumfangsrille (5C) definiert ist, und

ein Landanteil des äußeren mittleren Landabschnitts (7D) in einem Bereich von 80% bis 120% eines Landanteils des inneren mittleren Landabschnitts (7B) liegt.

10. Reifen (1) nach einem der Ansprüche 1 bis 9, wobei

der Laufflächenabschnitt (2) einen äußeren Schulterlandabschnitt (7E), der zwischen der äußeren Schulterumfangsrille (5A) und der äußeren Laufflächenkante (3) definiert ist, und einen inneren Schulterlandabschnitt (7C) aufweist, der zwischen der inneren Schulterumfangsrille (5D) und der inneren Laufflächenkante (4) definiert ist, und

ein Landanteil des äußeren Schulterlandabschnitts (7E) in einem Bereich von 100% bis 150% eines Landanteils des inneren Schulterlandabschnitts (7C) liegt.

**Revendications**

1. Pneu (1) comprenant :

une bande de roulement (2) ayant une direction de montage désignée sur un véhicule, la bande de roulement (2) comprenant un bord de bande de roulement extérieur (3) situé à l'extérieur d'un véhicule lorsqu'il est monté sur le véhicule, un bord de bande de roulement intérieur (4) situé à l'intérieur d'un véhicule lorsqu'il est monté sur le véhicule, une pluralité de rainures circonférentielles (5) s'étendant continuellement dans la direction circonférentielle du pneu (1) entre le bord de bande de roulement extérieur (3) et le bord de bande de roulement intérieur (4), et une pluralité de rainures latérales (6) s'étendant dans une direction croisant la pluralité de rainures circonférentielles (5),

la pluralité de rainures circonférentielles (5) comprenant une rainure circonférentielle d'épaulement extérieure (5A), une rainure circonférentielle de sommet extérieure (5B), une rainure circonférentielle de sommet intérieure (5C) et une rainure circonférentielle d'épaulement intérieure (5D) qui sont disposées dans cet ordre depuis un côté de bord de bande de roulement extérieur à un côté de bord de bande de roulement intérieur, et

une largeur de rainure W1 de la rainure circonférentielle d'épaulement extérieure (5A), une largeur de rainure W2 de la rainure circonférentielle de sommet extérieure (5B), une largeur de rainure W3 de la rainure circonférentielle de sommet intérieure (5C) et une largeur de rainure W4 de la rainure circonférentielle d'épaulement intérieure (5D) satisfaisant la relation suivante :

$$W1 < W2 < W3 < W4,$$

la bande de roulement (2) comprenant une partie d'appui centrale intérieure (7B) définie entre la rainure circonférentielle d'épaulement intérieure (5D) et la rainure circonférentielle de sommet intérieure (5C),

la pluralité de rainures latérales (6) comprenant une pluralité de rainures latérales centrales intérieures (6B) s'étendant de la rainure circonférentielle d'épaulement intérieure (5D) à la rainure circonférentielle de sommet intérieure (5C),

la partie bande de roulement (2) comprenant une partie d'appui de sommet (7A) définie entre la rainure circonférentielle de sommet extérieure (5B) et la rainure circonférentielle de sommet intérieure (5C), et

la pluralité de rainures latérales (6) comprenant une pluralité de rainures latérales de sommet (6A) s'étendant à partir de la rainure circonférentielle de sommet intérieure (5C) et se terminant dans la partie d'appui de sommet (7A),

**caractérisé en ce que**

la somme de la valeur totale de largeurs de rainure maximales W5 de la pluralité de rainures latérales de sommet (6A) et de la valeur totale de largeurs de rainure maximales W6 des rainures latérales centrales intérieures (6B) étant dans une plage comprise entre 30 % et 40 % d'une longueur circonférentielle de la partie bande de roulement (2).

**2.** Pneu (1) selon la revendication 1,

la pluralité de rainures latérales de sommet (6A) comprenant des premières ouvertures (11) qui s'ouvrent sur la rainure circonférentielle de sommet intérieure (5C),

la pluralité de rainures latérales centrales intérieures (6B) comprenant des deuxièmes ouvertures (12) qui s'ouvrent sur la rainure circonférentielle de sommet intérieure (5C), et

les premières ouvertures (11) respectives étant disposées à des endroits différents dans la direction circonférentielle du pneu (1) par rapport aux deuxièmes ouvertures (12) respectives de sorte à ne pas faire face aux deuxièmes ouvertures (12) respectives dans une direction axiale de pneu.

**3.** Pneu (1) selon la revendication 1 ou 2,

la partie bande de roulement (2) comprenant une partie d'appui d'épaulement intérieure (7C) définie entre la rainure circonférentielle d'épaulement intérieure (5D) et le bord de bande de roulement intérieur (4), et

la pluralité de rainures latérales (6) comprenant une pluralité de rainures latérales d'épaulement intérieures (6C) s'étendant de la rainure circonférentielle d'épaulement intérieure (5D) au bord de bande de roulement intérieur (4).

**4.** Pneu (1) selon la revendication 3,

la pluralité de rainures latérales centrales intérieures (6B) comprenant des troisièmes ouvertures (13) qui s'ouvrent sur la rainure circonférentielle d'épaulement intérieure (5D), et

la pluralité de rainures latérales d'épaulement intérieures (6C) comprenant des quatrièmes ouvertures (14) qui s'ouvrent sur la rainure circonférentielle d'épaulement intérieure (5D), et

les troisièmes ouvertures (13) respectives étant disposées à des endroits différents dans la direction circonférentielle du pneu (1) à partir des quatrièmes ouvertures (14) respectives, de sorte à ne pas faire face aux quatrièmes ouvertures (14) respectives dans une direction axiale de pneu.

5. Pneu (1) selon la revendication 3 ou 4,
   la somme de la valeur totale des largeurs de rainure maximales de la pluralité de rainures latérales d'épaulement intérieures (6C) et de la valeur totale des largeurs de rainure maximales des rainures latérales centrales intérieures (6B) étant dans une plage comprise entre 20 % et 30 % de la longueur circonférentielle de la partie bande de roulement (2).

6. Pneu (1) selon l'une quelconque des revendications 1 à 5,

   la partie bande de roulement (2) comprenant une partie d'appui centrale extérieure (7D) définie entre la rainure circonférentielle d'épaulement extérieure (5A) et la rainure circonférentielle de sommet extérieure (5B), et
   la pluralité de rainures latérales (6) comprenant une pluralité de premières rainures latérales centrales extérieures (6D) s'étendant à partir de la rainure circonférentielle d'épaulement extérieure (5A) et se terminant à l'intérieur de la partie d'appui centrale extérieure (7D).

7. Pneu (1) selon la revendication 6,
   la pluralité de rainures latérales (6) comprenant une pluralité de deuxièmes rainures latérales centrales extérieures (6E) s'étendant à partir de la rainure circonférentielle de sommet extérieure (5B) et se terminant à l'intérieur de la partie d'appui centrale extérieure (7D).

8. Pneu (1) selon la revendication 7,

   la pluralité de premières rainures latérales centrales extérieures (6D) comprenant des cinquièmes ouvertures (15) qui s'ouvrent sur la rainure circonférentielle d'épaulement extérieure (5A),
   la deuxième rainure latérale centrale extérieure (6E) comprenant des sixièmes ouvertures (16) qui s'ouvrent sur la rainure circonférentielle de sommet extérieure (5B), et
   les cinquièmes ouvertures (15) respectives étant disposées à des endroits différents dans la direction circonférentielle du pneu (1) à partir des sixièmes ouvertures (16) respectives.

9. Pneu (1) selon l'une quelconque des revendications 1 à 8,

   la partie bande de roulement (2) comprenant une partie d'appui centrale extérieure (7D) définie entre la rainure circonférentielle d'épaulement extérieure (5A) et la rainure circonférentielle de sommet extérieure (5B), et une partie d'appui centrale intérieure (7B) définie entre la rainure circonférentielle d'épaulement intérieure (5D) et la rainure circonférentielle de sommet intérieure (5C), et
   un ratio d'appui de la partie d'appui centrale extérieure (7D) étant compris entre 80 % et 120 % d'un ratio d'appui de la partie d'appui centrale intérieure (7B).

10. Pneu (1) selon l'une quelconque des revendications 1 à 9,

    la partie bande de roulement (2) comprenant une partie d'appui d'épaulement extérieure (7E) définie entre la rainure circonférentielle d'épaulement extérieure (5A) et le bord de bande de roulement extérieur (3), et une partie d'appui d'épaulement intérieure (7C) définie entre la rainure circonférentielle d'épaulement intérieure (5D) et le bord de bande de roulement intérieur (4), et
    le rapport d'appui de la partie d'appui d'épaulement extérieure (7E) étant dans la plage comprise entre 100 % et 150 % du rapport d'appui de la partie d'appui d'épaulement intérieure (7C).

**FIG.1**

FIG.2

# FIG.3

# FIG.4

# FIG.5

## FIG.6A

## FIG.6B

# EP 4 015 246 B1

## REFERENCES CITED IN THE DESCRIPTION

**Patent documents cited in the description**

- JP 2020208703 A
- JP 2012224245 A
- US 2019152268 A1
- EP 689643 A1
- EP 3023267 A1
- EP 2620298 A1
- EP 3549791 A1